# EUROPEAN PATENT APPLICATION

(11) **EP 2 787 479 A1**
(43) Date of publication of application: **08.10.2014**
(21) Application number: 14167852.4
(22) Date of filing: 28.08.2009
(51) Int. Cl.: G06Q 30/02, G06Q 50/00, G06F 15/16

(54) **Targeted network content**

(30) Priority: 28.08.2008 US 92691 P
(62) Divisional of application: 09810648.7
(71) Applicant: WebAMG Holdings Limited, San Carlos, CA 94070 (US); Jewell, Robert S., Jr., Washington, DC 20007 (US)
(72) Inventor: Jewell, Robert S., Jr., Washington, DC District of Columbia 20007 (US)
(74) Representative: Grund, Martin

(57) **Abstract**

In one embodiment, a method includes sending an advertisement template to a device, the advertisement template including at least one predefined field configured to be populated with data associated with the predefined field, and sending to the device a first instruction configured to define a personalized advertisement based at least in part on the advertisement template and the data associated with the predefined field.

## Description

### Background

The present application claims priority to U.S. provisional application no. 61/092,691 entitled "Targeted Network Content," filed on August 28, 2008, which is hereby incorporated by reference herein.

Embodiments described herein relate generally to electronic advertisements, and more particularly to methods and apparatus for the creation and display of personalized Internet-based advertisements.

In recent years, businesses and other organizations have turned to the World Wide Web as a new medium through which to disseminate information about their products and services. Perhaps the most popular method for doing so is through Internet-based advertisements, which typically appear atop, below, or beside the featured content of a webpage or Internet application.

Many web-based advertisements are graphical in nature, designed to catch the user's attention and induce the user to click on the advertisement for redirection to the advertiser's site, where further information may be provided or a sale completed. Many advertisers seek to improve click-through rates for such advertisements by partnering with intermediaries who place the advertisements alongside content whose targeted viewership shares characteristics or interests with the target audience of the advertised product or service.

In some systems, an advertisement is selected for display based on the textual content of the associated webpage or Internet application, the general thematic elements of the website or Internet application in which the content is displayed, or on user behavioral information gathered through cookies or other tracking mechanisms. In this latter case, a user's web activity and browsing history is analyzed and stored to improve the accuracy of matching algorithms that determine which advertisement is likely to interest a given user. While storage of this information allows for its subsequent reuse, more detailed tracking, and improved user-advertisement matching, consumer advocacy and other groups have voiced concerns that the practice threatens to compromise user privacy.

Such systems often suffer from inaccurate user-advertisement matching techniques, generally resulting in suboptimal click-through rates. This is so for a variety of reasons. First, one primary source of user information-the Internet Protocol (IP) addressis an imperfect indicator that fails to determine a user's identity or current geographic location with one-hundred-percent accuracy. This is so because user devices often access the Internet through a proxy server or from within a local area network (LAN) that masks the user's individual device identity within the local network. In some instances, the externally-represented IP address for all devices located within such a network is provided by a device or server located in a different geographic locale from that of the user's device, thus causing mismatches between the user's actual location and the location perceived by an advertisement matching algorithm. Such mismatches can, for example, mislead a matching algorithm into erroneously displaying an advertisement for a business physically located far from the user-a result rather unlikely to produce a successful click-through.

As an alternative to the IP address, some systems attempt to identify individuals through use of a browser cookie. However, because a cookie merely identifies the device on which it is stored and/or the particular browser through which it was originally obtained, it can erroneously represent multiple users of a public or family device as a single individual. Moreover, an individual who uses more than one Internet-connected device is likely to be represented by two distinct cookies, resulting in a fragmented and thus incomplete behavioral profile for that individual.

Even if the behavioral profile generated for a given user is accurate, typical advertisement systems are still limited in their ability to reliably select suitable advertisements for that user. This is so because such profiles are comprised of browsing activity and other second-order information from which only implicit determinations can be made. Therefore, matching algorithms based on this type of information can make only educated guesses of a user's preferences and personal characteristics. This imprecision on the data input side inevitably results in correlated imprecision on the advertisement selection (data output) side.

Much of this imprecision can be overcome through use of a more trustworthy data set, such as a user's stated preferences and other self-reported information. Thus, a need exists for methods and apparatus that produce more effective Internet advertisements based on a user's stated preferences and other self-disclosed information. A need further exists for methods and apparatus that deliver personalized Internet advertisements using an approach that obviates the need for storing user information at a server, and thus overcomes potential privacy concerns.

### Summary

In one embodiment, a method includes sending an advertisement template to a device, the advertisement template including at least one predefined field configured to be populated with data associated with the predefined field, and sending to the device a first instruction configured to define a personalized advertisement based at least in part on the advertisement template and the data associated with the predefined field.

### Brief Description of the Drawings

FIG. 1 is a schematic diagram that illustrates a web server, client device, application developer server, advertisement management server and advertisement template server, each coupled to a communication network, according to an embodiment.
FIG. 2 is a schematic diagram that illustrates an example of a personalized advertisement displayed within a webpage, according to an embodiment.
FIG. 3 is a flowchart that illustrates a method of producing and displaying a personalized advertisement based on information associated with a user, according to an embodiment.
FIG. 4 is a schematic diagram that illustrates an example of an advertisement template containing user information tokens, according to an embodiment.
FIG. 5 is a schematic diagram that illustrates an example of a personalized advertisement displayed within a third-party web content object, according to an embodiment.

### Detailed Description

An advertisement template server can be configured to define an advertisement template that includes at least one predefined field configured to be populated with data associated with the predefined field. In some embodiments, the advertisement template can define, for example, a text-based advertisement, a banner advertisement containing text and/or graphics, or an advertisement that includes any combination of text, image, and video content. In some embodiments, the advertisement template can include default information fields configured to be dynamically populated with current news or other information. In some embodiments, the advertisement template can include one or more tokens configured to be replaced by information associated with one or more individuals, such as a user of a social network website and/or one or more network friends of the user.

In some embodiments, an advertisement template server can be configured to serve an advertisement template and/or an advertisement generation script to a hardware-and/or software-based Internet application for client-side generation and display of a personalized advertisement. In some embodiments, the advertisement template server can select an advertisement template for delivery to the Internet application based at least in part on data included in an advertisement template request. In some embodiments, the advertisement template server can receive from an advertisement manager server information that indicates which advertisement template among many to send for processing by the web-enabled application. In some embodiments, the advertisement manager server and the advertisement template server can be executed on the same device. In some embodiments, the two servers may execute on two or more separate devices.

In some embodiments, the advertisement generation script can be configured to be executed on a client device to dynamically generate a personalized advertisement. In some embodiments, the script can be configured to cause an Internet application to query a website for data associated with a website user, such as profile information associated with a user of a social networking site and/or profile or other information associated with one or more network friends of the user. In some embodiments, the script can be configured to cause an Internet application to determine a set of "best friends" associated with the user from among the user's social network friends. In such embodiments, the script can utilize information associated with the "best friends" when generating a personalized advertisement for the user.

In some embodiments, the advertisement generation script can be configured to cause an Internet application to receive data and employ that data to replace one or more tokens within an advertisement template, thereby producing a personalized advertisement. In some embodiments, the advertisement generation script can be configured to cause an Internet application to dynamically request and receive other data not associated with a user, such as news or other information. The other data can likewise be used to replace one or more tokens within an advertisement template to produce a customized advertisement.

In some embodiments, the advertisement template and advertisement generation script can be sent to an Internet application for generation and display of a personalized advertisement within a social network web content object or webpage. In some such embodiments, the personalized advertisement can be displayed within a first-, second- or third-party social network application portion of the social network web content object or webpage. In some embodiments, code instructions associated with the social network application can be received by the Internet application from an application developer server. In some embodiments, the application developer server can be configured to receive an initial advertisement request from an Internet application, and relay a subsequent request for advertisement template and/or advertisement generation script information to one or both of an advertisement manager server and an advertisement template server. In some embodiments, the personalized advertisement can be displayed within a third-party webpage, third-party web content object or third-party web application, the personalized advertisement including user information obtained from a social networking service or website.

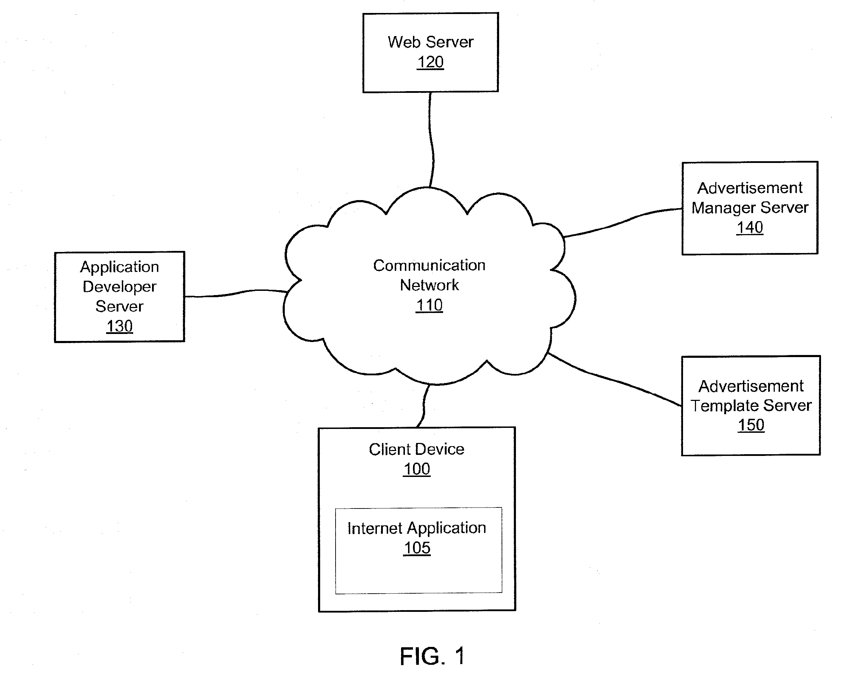

FIG. 1 is a schematic diagram that illustrates a web server, client device, application developer server, advertisement management server and advertisement template server, each coupled to a communication network, according to an embodiment. Specifically, FIG. 1 illustrates a client device 100 capable of storing and executing an Internet application module 105, operatively coupled to a communication network 110. The communication network 110 is operatively coupled to a web server 120, an application developer server 130, an advertisement manager server 140 and an advertisement template server 150.

Client device 100 can be, for example, a personal desktop computer, a laptop, notebook, or netbook computer, a tablet computing device, a cellular telephone, a portable e-mail device, a Voice Over Internet Protocol (VoIP) telephone, a personal digital assistant (PDA), a geographic positioning satellite (GPS) navigation device, a portable digital audio player (DAP), or similar electronic device capable of displaying text and/or media content received via a network. Client device 100 can be configured to include an Internet application module 105, which can be configured to send and receive content via the World Wide Web. Internet application module 105 can be, for example, a web browser application, a smart phone application, or other software- and/or hardware module capable of transmitting and receiving information over a computer network such as the Internet.

Communication network 110 can be, for example, a local area network (LAN), a wide area network (WAN), the Internet, or other wireless communication network based on a short-range protocol such as infrared, Bluetooth, Ultra Wide Band (UWB), wireless USB, Wi-Fi, WiMax, etc.

Web server 120 can include one or more modules, each of which may be implemented, for example, in hardware (e.g., a processor, an application-specific integrated circuit (ASIC), or a field programmable gate array (FPGA)), and/or in software that resides on a hardware device (e.g., a processor) or in a memory (e.g., a RAM, a ROM, a hard disk drive, an optical drive, or other removable media) coupled to a processor. The one or more modules can be implemented and/or resident on devices connected over, for example, a network such as a local area network (LAN), a wide area network (WAN), the Internet, and/or a wireless data connection, such as a Bluetooth or infrared connection. The web server 120 can be configured to include a web server module, such as the Apache Web Server, Microsoft Internet Information Server (IIS), or other hardware- and/or software-based module configured to serve content in response to Internet requests, such as requests made using the Hypertext Transfer Protocol (HTTP). Web server 120 can be further configured to include one or more application servers, such as a PHP application server, a ColdFusion server, a J2EE (Java 2 Enterprise Edition) server, a Microsoft .Net server, a Perl server, or other web application server. In some embodiments, web server 120 can include other hardware and/or software configured to transmit and receive content over the Internet

Application developer server 130 can include one or more modules, each of which may be implemented, for example, in hardware (e.g., a processor, an application-specific integrated circuit (ASIC), or a field programmable gate array (FPGA)), and/or in software that resides on a hardware device (e.g., a processor) or in a memory (e.g., a RAM, a ROM, a hard disk drive, an optical drive, or other removable media) coupled to a processor. The one or more modules can be implemented and/or resident on devices connected over, for example, a network such as a local area network (LAN), a wide area network (WAN), the Internet, and/or a wireless data connection, such as a Bluetooth or infrared connection. Application developer server 130 can be configured to include a web server module, such as the Apache Web Server, Microsoft Internet Information Server (IIS), or other hardware-and/or software-based module configured to serve web content in response to Internet requests, such as requests made using the Hypertext Transfer Protocol (HTTP). Application developer server 130 can be further configured to include one or more application servers, such as a PHP application server, a ColdFusion server, a J2EE (Java 2 Enterprise Edition) server, a Microsoft .Net server, a Perl server, or other web application server. In some embodiments, application developer server 130 can include one or more hardware- and/or software-based modules stored and executed on the same device or machine as web server 120. In some embodiments, application developer server 130 can include other hardware and/or software configured to transmit and receive content over the Internet

Advertisement manager server 140 can be comprised of one or more modules, each of which may be implemented, for example, in hardware (e.g., a processor, an application-specific integrated circuit (ASIC), or a field programmable gate array (FPGA)), and/or in software that resides on a hardware device (e.g., a processor) or in a memory (e.g., a RAM, a ROM, a hard disk drive, an optical drive, or other removable media) coupled to a processor. The one or more modules can be implemented and/or resident on devices connected over, for example, a network such as a local area network (LAN), a wide area network (WAN), the Internet, and/or a wireless data connection, such as a Bluetooth or infrared connection. Advertisement manager server 140 can include one or more modules configured to store and serve advertisement content, such as a Google AdManager module or other ad management and/or ad server module. In some embodiments, advertisement manager server 140 can be configured to store and serve advertisement content on a per-user basis and, for example, to serve advertisement content based at least in part on demographic information received from an advertisement-requesting entity. In some embodiments, advertisement manager server 140 can include other hardware and/or software configured to transmit and receive content over the Internet

Advertisement template server 150 can be comprised of one or more modules, each of which may be implemented, for example, in hardware (e.g., a processor, an application-specific integrated circuit (ASIC), or a field programmable gate array (FPGA)), and/or in software that resides on a hardware device (e.g., a processor) or in a memory (e.g., a RAM, a ROM, a hard disk drive, an optical drive, or other removable media) coupled to a processor. The one or more modules can be implemented and/or resident on devices connected over, for example, a network such as a local area network (LAN), a wide area network (WAN), the Internet, and/or a wireless data connection, such as a Bluetooth or infrared connection. Advertisement template server 150 can be configured to include a web server module, such as the Apache Web Server, Microsoft Internet Information Server (IIS), or other hardware- and/or software-based module configured to serve web content in response to Internet requests, such as requests made using the Hypertext Transfer Protocol (HTTP). Advertisement template server 150 can be further configured to include one or more modules capable of serving advertisement template information via communication network 110 to client device 100 for execution by Internet application module 105. In some embodiments, advertisement template server 150 can be configured to send one or more advertisement generation scripts to client device 100 for use in generating a personalized advertisement. In some embodiments, advertisement template server 150 can be a hardware-and or software-based module stored and executed on the same device or machine as advertisement manager server 140. In some embodiments, advertisement template server 150 can include other hardware and/or software configured to transmit and receive content over the Internet

Client device 100 can be configured to send one or more signals that include a request for Internet content, such as a web content request or webpage request. In some embodiments, the request can include addressing information related to social networking content, such as content provided by the Facebook, MySpace, Friendster, Orkut, or LinkedIn social network services. In some embodiments, the request can include addressing information related to a social networking webpage that includes a third-party social networking application. In some embodiments, the request can include addressing information associated with an advertisement content server, such as advertisement manager server 140 or advertisement template server 150. Signals that include the request can be transported via communication network 110 to any of web server 120, application developer server 130, advertisement manager server 140, or advertisement template server 150.

In some embodiments, client device 100 can receive content via communication network 110. In some embodiments, client device 100 can execute instructions associated with the content and/or render a portion of a webpage or web application defined by the content via Internet application module 105. In some embodiments, client device 100 can be configured to send one or more requests for embedded application and/or advertisement information via communication network 110 to one or more of web server 120, application developer server 130, advertisement manager 140, and advertisement template server 150. In some embodiments, client device 100 can be configured to query an application programming interface (API) associated with an Internet content provider, such as a social networking service or other website, to obtain profile information associated with a current user of the Internet content provider/website, or one or more social network friends of the current user. Client device 100 can be optionally configured to display, within Internet application module 105, one or more third-party applications and/or advertisement content. In some embodiments, the advertisement content can be include information associated with a current user of the content provider, such as the profile information mentioned above.

In some embodiments, web server 120 can be configured to receive a request and send related web content to client device 100 via communication network 110. In some embodiments, the web content can include instructions configured to cause Internet application module 105 to request third-party application information from application developer server 130 and/or advertisement information from application developer server 130, advertisement manager server 140 and/or advertisement template server 150. In some embodiments, web server 120 can be configured to send information responsive to a user information query, such as an application programming interface (API) query for information associated with a user of a website.

In some embodiments, application developer server 130 can be configured to receive one or more requests from client device 100, web server 120, and/or advertisement manager server 140. In some embodiments, application developer server 130 can be configured to send one or more signals that include instructions configured to cause client device 100 to include and execute a third-party social-networking application within Internet application module 105. In some embodiments, application developer server 130 can be configured to send one or more signals that include an advertisement template, an advertisement generation script, a personalized advertisement, and/or other advertisement information to client device 100 for execution by or display in Internet application module 105.

In some embodiments, advertisement manager server 140 can be configured to receive one or more requests from client device 100, web server 120, and/or application developer server 130. Advertisement manager server 140 can optionally be configured to send, to client device 100, one or more signals that include advertisement content associated with an advertisement manager customer. In some embodiments, the advertisement manager customer can be a developer associated with application developer server 130. In some embodiments, advertisement manager server 140 can be configured to send a request for advertising content to advertisement template server 150 via communication network 110.

In some embodiments, advertisement template server 150 can be configured to receive one or more requests from client device 100, web server 120, application developer server 130, and/or advertisement manager server 140. Advertisement template server 150 can optionally be configured to send, to client device 100, web server 120, application developer server 130, and/or advertisement manager server 140, one or more signals that include advertisement template content associated with an advertisement manager customer.

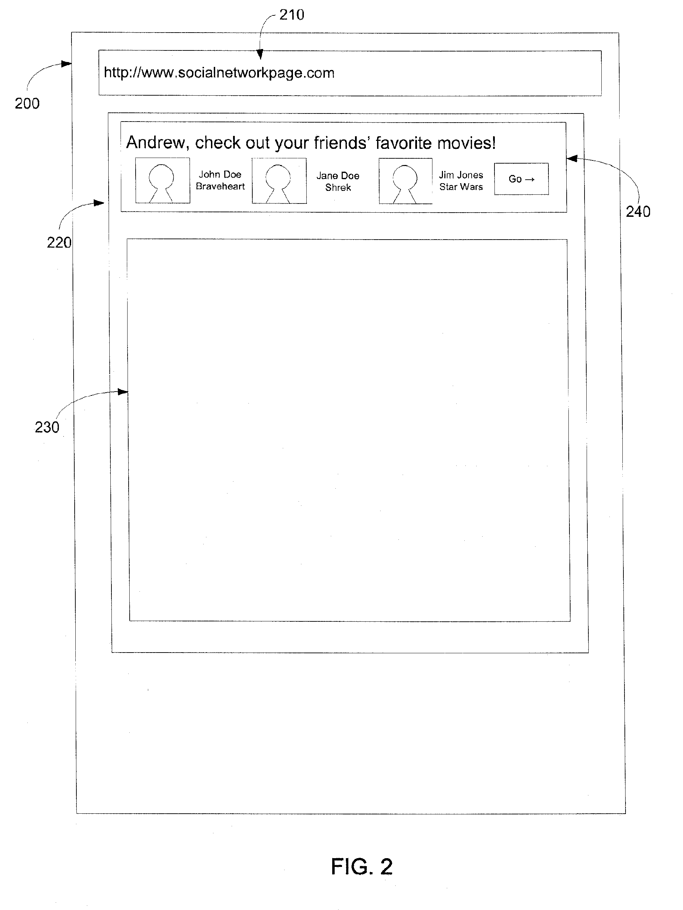

FIG. 2 is a schematic diagram that illustrates an example of a personalized advertisement displayed within a webpage, according to an embodiment. Specifically, FIG. 2 illustrates an Internet application 200 that includes a current address indicator 210, a webpage 220, an application region 230 and a personalized advertisement 240.

Internet application 200 can be, for example, a web browser software module such as the Microsoft Internet Explorer, Mozilla Firefox, Google Chrome, Opera, Apple Safari, Flock, Epiphany, or Konqueror web browsers. In some embodiments, Internet application 200 can be, for example, a web-enabled smartphone application or other hardware- and/or software-based application capable of sending and receiving data over a computer network such as the Internet. In some embodiments, Internet application 200 can be configured to be executed by a processor included in an Internet-connected device such as a personal computer or smartphone.

Current address indicator 210 can be an address of a current web content object 220 rendered and/or executed by Internet application 200. In some embodiments, current address indicator 210 can be the address of a webpage transmitted using the Hypertext Transfer Protocol (HTTP). In some embodiments, current address indicator 210 can be hidden from display.

Webpage 220 can be, for example, a Hypertext Markup Language (HTML) document, the output of a Common Gateway Interface (CGI) script, a Microsoft Active Server Page (ASP), a Java Server Page (JSP), a ColdFusion Markup Language (CFML) document, a PHP script, a multimedia object, a web-based software application, or other web content viewable by Internet application 200.

Application region 230 can be a portion of webpage 220 configured to receive code representing instructions to cause Internet application 200 to execute and render a software application, such as a software application nested within the webpage 220. In some embodiments, application region 230 can be defined by one or more coding constructs, such as, for example, an iframe, a div, or a frame.

Personalized advertisement 240 can include, for example, text and/or media content based on information associated with a current user of a web service that includes webpage 220. In some embodiments, personalized advertisement 240 can be defined by Internet application 200 based at least in part on content received from an advertisement template server similar to the advertisement template server discussed in connection with FIG. 1 above. In some embodiments, personalized advertisement 240 can be received, in already-defined form, from an advertisement manager, advertisement template, or application developer server similar to those discussed in connection with FIG. 1.

In some embodiments, personalized advertisement 240 can be displayed on a social network webpage or other content provided by a social networking service. In some embodiments, the personalized advertisement can be included within the display of a third-party application included in a social network webpage or other social network content. In some embodiments, the personalized advertisement can be displayed on a third-party website that is associated with a social network site through an inter-site connectivity program such as Facebook Connect.

Internet application 200 can be configured to receive information configured to render web content, such as webpage 220. In some embodiments, the information can include code such as hypertext markup language (HTML), JavaScript, or other Internet markup or scripting language. In some embodiments, Internet application 200 can be configured to receive scripting information from an advertisement template server or application developer server similar to those discussed in connection with FIG. 1 above. In some embodiments, Internet application 200 can be configured to execute said scripting information and include user profile information into the advertisement template to generate and render a personalized advertisement such as personalized advertisement 240.

In some embodiments, application region 230 can be defined by Internet application 200 in accordance with code received from a web server such as the web server discussed in connection with FIG. 1 above. In some embodiments, application region 230 can include instructions configured to request and receive third-party application code from a third-party developer server such as the third-party developer server discussed in connection with FIG. 1. In some embodiments, application region 230 can include instructions configured to request and receive application code from the web server. In some embodiments, Internet application 200 can be configured to execute the application code-be it received from a third-party developer server or the web server-so as to render and execute a software application within application region 230.

Personalized advertisement 240 can be defined based at least in part on, for example, an advertisement template received from an advertisement template server such as the advertisement template server discussed in connection with FIG. 1. In some embodiments, personalized advertisement 240 can be defined based at least in part on, for example, profile information associated with a user of a web service (such as a social-networking website) by which webpage 220 is provided. In some embodiments, the profile information can include a user name and/or profile information associated with one or more social network friends of the user. In some embodiments, the friend profile information can include, for example, one or more images of one or more network friends, one or more names of one or more network friends, and/or other information associated with one or more network friends, such as favorite media, interests, education information, birthday information, hometown information, etc.

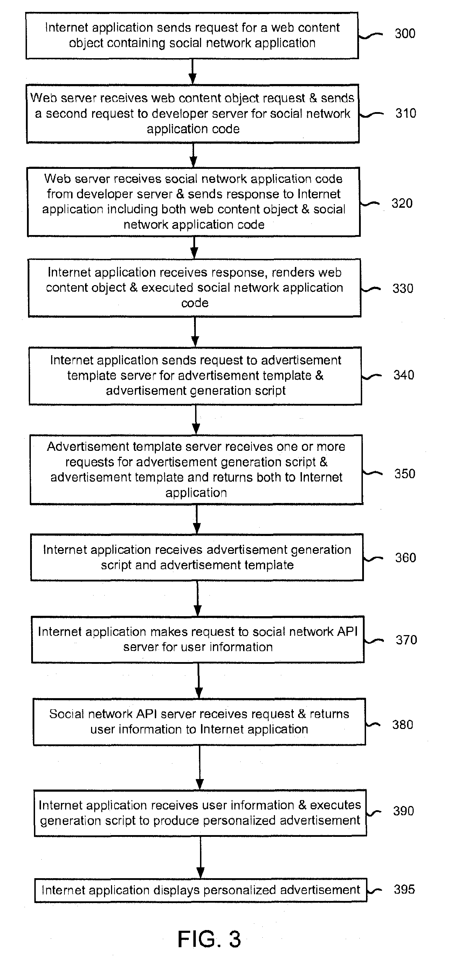

FIG. 3 is a flowchart that illustrates a method of producing and displaying a personalized advertisement based on information associated with a user, according to an embodiment. As shown in FIG. 3, an Internet application can send a request for a web content object containing a social network application, 300. The Internet application can be, for example, a web browser software module or program such as the Microsoft Internet Explorer, Mozilla Firefox, Google Chrome, Opera, Apple Safari, Flock, Epiphany, or Konqueror web browser. The request can be, for example, a hypertext transfer protocol (HTTP) request sent at least in part over a computer network, such as a local area network (LAN), wide area network (WAN), or the Internet. In some embodiments, the Internet application can be executed on, for example, a desktop or laptop computer, a cellular or Voice over Internet Protocol (VoIP) telephone, a personal digital assistant (PDA), or a tablet computing device. The social network application can be a first-, second-, or third-party social network application configured to run within web content provided by a social network service such as Facebook, MySpace, Friendster, Orkut, or other social network service.

A web server can receive the web content object request and send a second request to a developer server for social network application code, 310. In some embodiments, the second request can be sent at least in part over a computer network, such as a local area network (LAN), wide area network (WAN), or the Internet. In some embodiments, the developer server can be a hardware- and/or software-based device associated with a developer of a third-party social network development application. In other embodiments, the developer server can be associated with a social network service such as those mentioned above. In some embodiments, the web server can retrieve the social network application code from its own memory or from one or more servers associated with the social network.

In some embodiments, the social network application code can include one or more instructions that, when executed, cause an Internet application to render a social network application within a web content object. The social network application code can include, for example, Hypertext Markup Language (HTML) information, Cascading Style Sheet (CSS) information, scripting code (such as JavaScript or ActionScript code), or other instructions sufficient to execute a script compatible with a dynamic web scripting platform such as the Adobe Flash or Microsoft Silverlight platforms.

The web server can receive social network application code from the developer server and send a response to the Internet application including both a web content object and social network application code, 320. In some embodiments, the response can be comprised of multiple parts, each containing one or more of web content object code and social network application code.

The Internet application can receive the response, render the web content object and execute the social network application code, 330. The social network application code can be executed, for example, within a designated region of the web content object displayed within the Internet application. In some embodiments, the designated region can be a hierarchical coding construct, such as an iframe, a div, or other similar construct.

The Internet application can next send a request to an advertisement template server for an advertisement template and advertisement generation script, 340. The advertisement template server can be, for example, a hardware- and/or software-based device configured to send signals including one or more of: advertisement templates, advertisement content, and advertisement definition and presentation instructions. In some embodiments, the Internet application can alternatively send the advertisement content request to the developer server. In such an embodiment, the developer server can send, responsive to the request, a second request to the advertisement template server for the advertisement template and advertisement generation script.

In some embodiments, the Internet application can alternatively send two initial requests: a first sent directly to an advertisement management server (requesting an advertisement template), and a second request sent to the developer server or the advertisement server (requesting an advertisement generation script). In such embodiments, the advertisement management server can be configured to take one of three possible actions: first, return an advertisement template directly to the Internet application; second, send a subsequent request to the advertisement template server for an advertisement template; or third, send a subsequent request to the developer server for an advertisement template, which can then send a yet subsequent request to the advertisement server for an advertisement template.

In some embodiments, the advertisement template request can include anonymous characteristic information associated with a user, such as gender, age, education, network friend quantity and favorite media information. In some embodiments, the advertisement template request can include behavior, preference or other information associated with the user, such as social network profile information associated with the user. In some embodiments, the advertisement template request can include information derived from the profile information, such as an indication that the user has a significant interest in movies or music, has a particular hobby, etc. In some embodiments, the indication can be based at least in part on a calculation based at least in part on the profile information. Such information can serve as input that assists the advertising template server in selecting an advertising template targeted to the user. Because the information is anonymous-in that it fails to identify a particular user or provide information sufficient to identify a user-this process obviates privacy concerns that can arise from the disclosure of more personal user details.

The advertisement template server can receive one or more requests for an advertisement generation script and advertisement template, and return both to the Internet application, 350. In some embodiments, at least a portion of the advertisement generation script and advertisement template can be sent in separate responses. Corresponding to alternative embodiments described in connection with step 340, in some embodiments the advertisement template server can receive the one or more requests from one or more of: the Internet application, the developer server, and the advertisement manager server. In embodiments where the advertisement template is returned to the Internet application by another device or server (such as an advertisement manager server), the advertisement template server can be configured to send only the advertisement generation script to the Internet application.

In some embodiments, the advertisement template server can select which advertisement template to send to the Internet application based at least in part on information associated with a user included in the advertisement template request. For example, if the included information indicates that the current user is a teenage male whose favorite media includes one or more video games, an advertisement template related to a video game can be selected by the advertisement template server for delivery to the Internet application. Or, for example, if the included information indicates that the user is an amateur photographer, the advertisement template server can select an advertisement template associated with cameras and/or photography.

The Internet application can receive the advertisement generation script and advertisement template, 360. The advertisement generation script can include, for example, Hypertext Markup Language (HTML) information, Cascading Style Sheet (CSS) information, scripting code (such as JavaScript or ActionScript code), or other instructions sufficient to execute a script compatible with a dynamic web scripting platform such as the Adobe Flash or Microsoft Silverlight platforms.

The Internet application can make a request to a social network API server for user information, 370. The user information can include, for example, profile and friend information associated with a current user of the social network. In some embodiments, the profile information can include one or more of the following data associated with a user: gender, name, age, birth date, hometown, current location, political views, contact information, religious views, relationship status, romantic preferences, interest information, autobiographical narrative information, favorite media, affiliated web content, image content, occupation information, education information, quantity of network friends, or similar information associated with an individual. In some embodiments, the friend information can include any of the above information fields where the information is associated with a network friend of the user.

In some embodiments, the Internet application can make multiple API server information requests. In some embodiments, the Internet application can make an initial API server request to retrieve a list of network friends associated with the current user, along with profile and/or image information associated with each of the network friends. In such an embodiment, the API server can return the requested information to the Internet application. In some embodiments, the Internet application can be configured to receive the network friend information and perform a series of calculations thereon as dictated by an advertisement generation script.

For example, the advertisement generation script can include instructions configured to cause an Internet application to calculate, for each network friend associated with the user, a score that indicates the strength of that network friend's relationship with the user. The relationship strength score can be based at least in part on, for example, profile content associated with both the user and that network friend, such as an image in which both the user and the network friend appear and/or common hometown, education, occupation, favorite media, interest or other information. In some embodiments, the score can be based at least in part on a percentage of images included in the user's profile that are associated with both the user and the network friend, a percentage of images included in that network friend's profile that are associated with both the user and the network friend, and/or a quantity of images on the website associated with both the user and that network friend. As will be clear to the reader, in some embodiments the relationship strength score can be based on other relevant website information that, when analyzed, contributes to the strength of the relationship between the user and network friend.

In some embodiments, the advertisement generation script can further include instructions configured to cause the Internet application to select one or more network friends associated with the highest relationship scores for use in generating a personalized advertisement. In some embodiments, the Internet application can query the social network API server for further information associated with each of these "best" network friends.

The social network API server can be, for example, a hardware- and/or software-based module configured to receive API queries and return information relevant to the query. In some embodiments, the social network API server can be situated on a same physical device as the web server discussed above. In some embodiments, the social network API server can be situated on one or more devices different from the web server discussed above.

The social network API server can receive the request and return user information to the Internet application, 380. In some embodiments, the API can return the user information to the Internet application without refreshing the webpage, such as through AJAX (Asynchronous JavaScript and XML) or other similar techniques. As mentioned in connection with step 370, in some embodiments the social network API server can receive multiple information requests from the Internet application, including one or more requests for further information relating to a user's "best friends" as described above.

The Internet application can receive the user information and execute the advertisement generation script to produce a personalized advertisement, 390. In some embodiments, the advertisement template can include one or more tokens or field placeholders configured to be replaced by personal information associated with the user and/or information associated with a network friend of the user. In some embodiments, the advertisement generation script can include instructions to cause the Internet application to replace the one or more tokens or field placeholders with the personal information. In some embodiments, the tokens can be one of: a text token, an image token, a hyperlink token and a video token. In some embodiments, the personal advertisement can be one or more of: a media advertisement, an education advertisement and a website advertisement.

In some embodiments, the advertisement template can include default token values. The default token values can include, for example, information not associated with the user or a network friend of the user. For example, the default token values can include stock quote data or other news content organized into textual, graphical, or video form. In such embodiments, the advertisement generation script can be configured to display the default token values if the API request discussed in connection with steps 370 - 380 fails to return complete and/or meaningful information associated with the user and/or the user's network friends. In some embodiments, if the API request fails to return meaningful user and/or network friend information, the advertisement generation script can be configured to insert updated news and/or other content into the token or field placeholders included in the advertisement template.

The personalized advertisement can include, for example, a list of favorite movies associated with the user's network friends along with a link to purchase a ticket to view one or more of said movies, a list of network friends located in the same geographic region along with a link to contact any of said friends using an advertiser's service, a list of network friends with upcoming birthdays coupled with a link to purchase flowers for any of said friends, etc. In some embodiments, a list of one or more network friends included in the personalized advertisement can include one or more of: the network friend's name, an image associated with the network friend, or other profile information associated with the network friend.

The Internet application can display the personalized advertisement, 395. In some embodiments, the Internet application can display the personalized advertisement at a display device, such as a computer monitor, or other screen operatively or wirelessly coupled to an electronic device. In some embodiments, the Internet application can display the advertisement in the context of a social network web content object, such that the advertisement is presented in conjunction with social network content. In some embodiments, the Internet application can display the personal advertisement on a third-party website associated with a social network from which the user and/or network friend information was obtained.

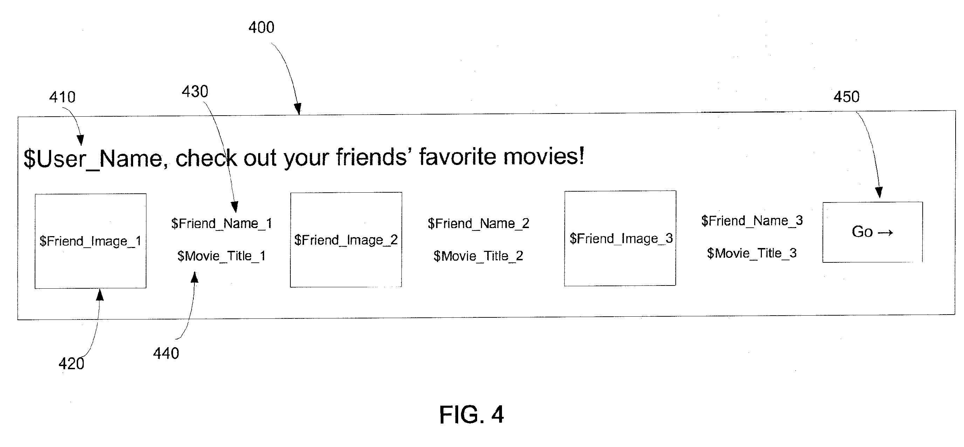

FIG. 4 is a schematic diagram that illustrates an example of an advertisement template containing user information tokens, according to an embodiment. Specifically, FIG. 4 illustrates an advertisement template 400 that includes user name token 410, friend image token 420, friend name token 430, movie title token 440 and advertiser link 450.

Advertisement template 400 can be defined such that it includes text, graphical, and/or video content. Advertisement template 400 can define, for example, a text advertisement, a banner advertisement, an image-based advertisement, a video advertisement, or any combination of the preceding. In some embodiments, the advertisement template can be combined with information associated with a user to produce a personalized advertisement similar to the personalized advertisement discussed in connection with FIG. 2.

User name token 410, friend image token 420, friend name token 430 and movie title token 440 can be text fields defined such that they are recognizable by an advertisement generation script similar to the advertisement generation script described in connection with FIG. 3. In some embodiments, user name token 410, friend image token 420, friend name token 430 and movie title token 440 can each be replaced, by an advertisement generation script, with profile information associated with a user and/or profile information associated with one or more network friends of the user. In some embodiments, the profile information can include one or more of text information, graphical information, and/or image information. Advertiser link 450 can include, for example textual and/or graphical content. In some embodiments, advertiser link 450 can be associated with an HTML hyperlink or other coding mechanism configured to redirect an Internet application to a web resource associated with an advertiser.

In some embodiments, each of user name token 410, friend image token 420, friend name token 430 and movie title token 440 can include default data not associated with a user or any network friend of the user. In some embodiments, the default data can be left in place by an advertisement generation script if the script has no profile information with which to replace the default data. In such embodiments, the default information can include one or more dynamic fields that can be updated based on one or more information requests to a news or information server (not shown).

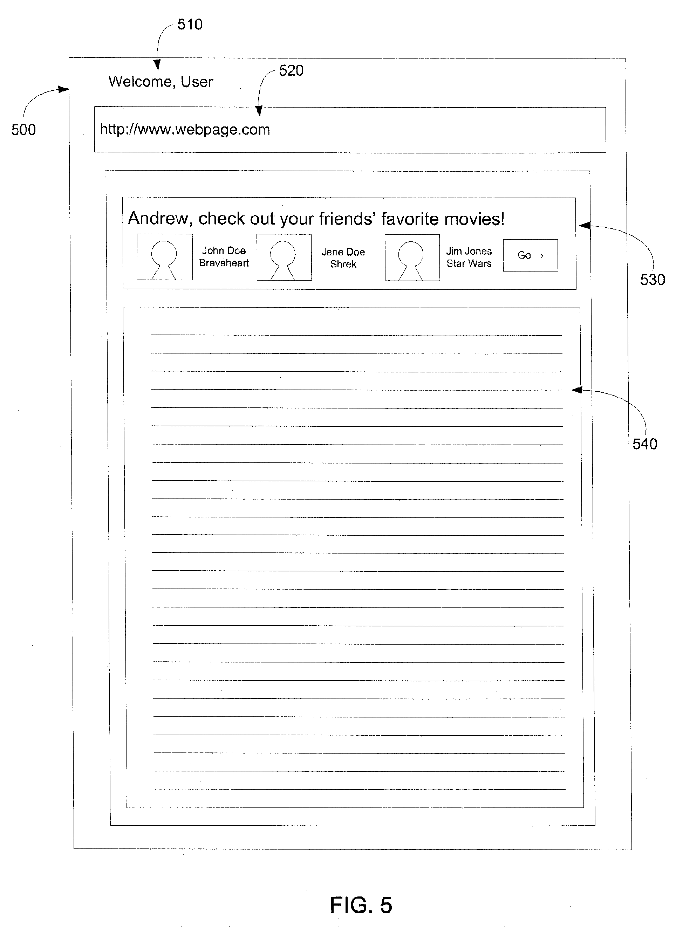

FIG. 5 is a schematic diagram that illustrates an example of a personalized advertisement displayed within a third-party web content object, according to an embodiment. Specifically, FIG. 5 illustrates an Internet application 500 that includes an indication of social network connectivity 510, a current address indicator 520, a personalized advertisement 530 and web content 540.

Internet application 500 can be, for example, a web browser software module such as the Microsoft Internet Explorer, Mozilla Firefox, Google Chrome, Opera, Apple Safari, Flock, Epiphany, or Konqueror web browsers. In some embodiments, Internet application 500 can be, for example, a web browser application, a smart phone application, or other software- and/or hardware module capable of transmitting and receiving information over a computer network such as the Internet. In some embodiments, Internet application 500 can be configured to be executed by a processor included in an Internet-connected device such as a personal computer or smartphone.

Indicator of social network connectivity 510 can be text and/or graphics indicating that a user is currently logged into a social networking service. In some embodiments, the social networking service can be associated with a provider of web content 540 and/or a service or website associated with a current address indicated by current address indicator 520.

Current address indicator 520 can be an address of a current web content object rendered and/or executed by Internet application 500. In some embodiments, current address indicator 510 can be the address of a webpage transmitted using the Hypertext Transfer Protocol (HTTP). In some embodiments, current address indicator 520 can be hidden from display.

Personalized advertisement 530 can include, for example, text and/or media content based on information associated with a current user of a social networking service as described above. In some embodiments, the information associated with the current user can include social network profile information of the user and/or social network profile information associated with one or more network friends of the user. In some embodiments, personalized advertisement 530 can be defined by Internet application 500 based at least in part on content received from an advertisement template server similar to the advertisement template server discussed in connection with FIG. 1 above. In some embodiments, personalized advertisement 530 can be received, in already-defined form, from an advertisement manager, advertisement template, or application developer server similar to those discussed in connection with FIG. 1.

Web content 540 can be, for example, a Hypertext Markup Language (HTML) document, the output of a Common Gateway Interface (CGI) script, a Microsoft Active Server Page (ASP), a Java Server Page (JSP), a ColdFusion Markup Language (CFML) document, a PHP script, a multimedia object, a web-based software application, or other web content viewable by Internet application 200.

In some embodiments, personalized advertisement 530 can be displayed in a web content object, such as a web page or web-enabled software application (such as a smartphone application or "app"). In some embodiments, the web page or web-enabled software application can be associated with a social network service through an inter-site connectivity program such as Facebook Connect.

Internet application 500 can receive instructions configured to cause it to render web content, such as web content 540. In some embodiments, the instructions can include code such as hypertext markup language (HTML), JavaScript, or other Internet markup or scripting language. In some embodiments, Internet application 500 can be configured to receive scripting information from an advertisement template server or application developer server similar to those discussed in connection with FIG. 1 above. In some embodiments, Internet application 500 can be configured to execute said scripting information and include user profile information into the advertisement template to generate and render a personalized advertisement such as personalized advertisement 530.

Personalized advertisement 530 can be defined based at least in part on, for example, an advertisement template received from an advertisement template server such as the advertisement template server discussed in connection with FIG. 1. In some embodiments, personalized advertisement 530 can be defined based at least in part on, for example, profile information associated with a user of a web service (such as a social-networking website). In some embodiments, the profile information can include a user name and/or profile information associated with one or more social network friends of the user. In some embodiments, the friend profile information can include, for example, one or more images of one or more network friends, one or more names of one or more network friends, and/or other information associated with one or more network friends, such as favorite media, interests, education information, birthday information, hometown information, etc.

Although the embodiments described herein discuss advertisements displayed on or in connection with a social networking website, it should be understood that some embodiments could be related to, for example, any type of website, or any type of network content, such as text or word processor documents, media presentations, and the like.

Some embodiments described herein relate to a computer storage product with a computer-readable medium (also can be referred to as a processor-readable medium) having instructions or computer code thereon for performing various computer-implemented operations. The media and computer code (also can be referred to as code) may be those designed and constructed for the specific purpose or purposes. Examples of computer-readable media include, but are not limited to: magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), and Read-Only Memory (ROM) and Random-Access Memory (RAM) devices.

Examples of computer code include, but are not limited to, micro-code or micro-instructions, machine instructions, such as produced by a compiler, code used to produce a web service, and files containing higher-level instructions that are executed by a computer using an interpreter. For example, embodiments may be implemented using Java, C++, or other programming languages (e.g., object-oriented programming languages) and development tools. Additional examples of computer code include, but are not limited to, control signals, encrypted code, and compressed code.

While various embodiments have been described above, it should be understood that they have been presented by way of example only, not limitation, and various changes in form and details may be made. Any portion of the apparatus and/or methods described herein may be combined in any combination, except mutually exclusive combinations. In particular, any of a client device, web server, third party application server, advertisement manager server, advertisement template server, or Internet application may be combined in any combination, and may communicate in any configuration so as to generate and/or display a personalized advertisement at a client device. The embodiments described herein can include various combinations and/or sub-combinations of the functions, components and/or features of the different embodiments described.

Disclosed are the following items:
1. A method, comprising: sending an advertisement template to a device, the advertisement template including at least one predefined field configured to be populated with data associated with the predefined field; and sending to the device a first instruction configured to define a personalized advertisement, the personalized advertisement being defined based at least in part on the advertisement template and the data associated with the predefined field.
2. The method of item 1, further comprising: sending to the device a second instruction configured to trigger display of the personalized advertisement at a display device.
3. The method of item 1 , wherein the data associated with the predefined field includes information associated with a user.
4. The method of item 1 , wherein the first instruction is executed by an Internet application operating at an Internet-connected device.
5. The method of item 1 , wherein the data associated with the predefined field includes one or more of: profile information of a user of a social network through which the personal advertisement is displayed; image information of the user; profile information of a network friend associated with the user; and image information of a network friend associated with the user.
6. The method of item 1 , wherein the personalized advertisement is defined such that the data associated with the predefined field is displayed within the advertisement when the advertisement is displayed.
7. The method of item 1 , wherein the data associated with the predefined field is retrieved from one or more of: a first social network profile associated with a first user of a social network; and a second social network profile associated with a social network friend of the first user.
8. The method of item 1 , wherein the sending the advertisement template is in response to a request from one or more of: an advertising manager module; a social network application module; and a social network web server.
9. The method of item 1 , wherein the advertisement template is formatted such that the personalized advertisement is configured to be displayed within a portion of a webpage populated by a social network application defined by a third party.
10. The method of item 1, wherein the advertisement template is formatted such that the personalized advertisement is configured to be displayed within a portion of a web content object provided by a content provider associated with a social network.
11. A computer-readable storage medium comprising code representing instructions to cause a processor to: receive a request including information associated with a user; send, in response to the request, an advertisement template selected based at least in part on the user characteristic information; and send a first instruction configured to define a personalized advertisement, the personalized advertisement being defined based at least in part on the advertisement template and information associated with a user friend.
12. The computer-readable storage medium of item 11 , further comprising code representing instructions to cause a processor to: send a second instruction configured to trigger display of the personalized advertisement at a display device.
13. The computer-readable storage medium of item 11, wherein the information associated with the user includes anonymous information that describes the user.
14. The computer-readable storage medium of item 13, wherein the anonymous information includes an indication based at least in part on a calculation based at least in part on social network profile information.
15. The computer-readable storage medium of item 11 , wherein the user friend information includes one or more of: a profile image of the friend; and social network profile information associated with the friend.
16. The computer-readable storage medium of item 12, wherein the advertisement template includes a plurality of content tokens and the second instruction is further configured to trigger replacement of one or more content tokens from the plurality of content tokens with at least a portion of the information associated with the user friend.
17. The computer-readable storage medium of item 12, wherein the advertisement template includes a plurality of content tokens, and the second instruction is further configured to trigger replacement of one or more content tokens from the plurality of content tokens with information not associated with the user or the user friend if the information associated with the user friend is incomplete.
18. The computer-readable storage medium of item 15, wherein each content token from the plurality of content tokens is one of: a text token; an image token; a hyperlink token; and a video token.
19. A method, comprising : sending a first request, the first request including a user identifier associated with a user of a network; receiving, in response to the first request, a plurality of friend identifiers; calculating a plurality of relationship strength scores, each relationship strength score from the plurality of relationship strength scores being based at least in part on profile content associated with both a friend identifier from the plurality of friend identifiers and the user identifier; selecting a friend identifier from the plurality of friend identifiers based at least in part on the plurality of relationship strength scores; and defining an advertisement based at least in part on information associated with the friend identifier such that the information associated with the friend identifier is displayed within the advertisement.
20. The method of item 19, wherein the profile content includes one or more of: an image; name information; gender information; birthday information; current location information; political preference information; religious views information; marital status information; romantic preference information; contact information; hometown information; education information; occupation information; favorite media information; and interest information.
21. The method of item 20, wherein the calculating is based at least in part on one or more of: a percentage of images associated with the user identifier that are also associated with a friend identifier from the plurality of friend identifiers; a percentage of images associated with the friend identifier from the plurality of friend identifiers that are also associated with the user identifier; a quantity of images associated with both the user identifier and the friend identifier; and a match between a first portion of a first profile information associated with the user identifier and a second portion of a second profile information associated with the friend identifier.
22. The method of item 19, wherein the selecting is based at least in a part on a determination of a group of one or more highest relationship strength scores from the plurality of relationship strength scores.
23. The method of item 19, wherein the advertisement is one of: a media advertisement; an education advertisement; and a website advertisement.

## Claims

1. A method for efficiently generating targeted network content based on a trustworthy data set, comprising:
a) serving an advertisement template and an advertisement generation script to a client device (100) configured to include an Internet application module (105; 200) which is configured for client-side generation and display of said targeted network content,
wherein the advertisement template includes at least one predefined field configured to be populated with data associated with the predefined field; and
b) receiving, by the client device (100), a first instruction configured to cause the client device (100), in cooperation with the Internet application module (105; 200), to query a third party website or web application for obtaining said data from said website or web application,
wherein the data corresponds to one or more trustworthy user-associated data sets stored in an account linked to said user at the third party website or web application; and
c) generating targeted network content using the Internet application module (105; 200), by at least in part populating the received advertisement template with the received user-associated data set in the predefined field of said template.

2. The method of claim 1, wherein the device (100) is configured to communicate over a communication network (110) with one or more of a web server (120), an application developer server (130), an advertisement manager server (140) or an advertisement template server (150).

3. The method of claim 2, wherein the Internet application (105; 200) receives the advertisement template and the advertisement generation script (340) by sending a request directly to:
a) the advertisement template server (150); or
b) the application developer server (130), wherein the application developer server (130) communicates with the advertisement template server (150) to receive said advertisement template and advertisement generation script; or
c) the advertisement manager server (140) for receiving the advertisement template, and the advertisement template server (150) or application developer server (130) for receiving the advertisement generation script.

4. The method of claim 3, wherein the direct request sent by Internet application (105; 200) contains at least part of the obtained user-associated data.

5. The method of claim 4, wherein the advertisement template is selected in cooperation with an advertisement template server (150) based at least in part on the obtained user-associated data contained in the direct request.

6. The method of claim 1, wherein in generating step b), the Internet application module (105; 200) further queries an application program interface (API) associated with the third party website or web application for obtaining the one or more trustworthy user-associated data sets stored at said website or web application, wherein said one or more data sets to populate the predefined field on the advertisement template include associated third party data corresponding to non-user data stored at the website or web application.

7. The method of claim 1, wherein prior to the serving step a), the Internet application module (105; 200) receives a social network application code that, when executed, causes the Internet application module (105; 200) to render a social network application within a network content object.

8. The method of any preceding claim, wherein the device (100) is configured to display, within Internet application module (105; 200), the user-associated data sets stored at said website or web application.

9. The method of claim 1, further comprising receiving, with the client device (100), a second instruction associated with the advertising generation script configured to trigger display of the targeted network content at the device (100), wherein the obtained data associated with the predefined field is displayed within the advertisement template when the targeted network content is displayed.

10. The method of any preceding claim, further comprising:
wherein the advertisement template includes a plurality of tokens such that the advertisement generation script is configured to cause the Internet application (105; 200) to receive the user-associated data and replace said one or more tokens in the plurality of tokens with said user-associated data.

11. The method of claim 10, wherein each token from the plurality of tokens is one or more of:
a text token;
an image token;
a hyperlink token; and
a video token.

12. The method of any preceding claim, wherein the data populating the predefined field of the advertising template includes any combination of text, image and/or video data.

13. Logic encoded in one or more tangible computer-readable storage media that includes code for execution and when executed by a processor performs operations comprising a method according to any of claims 1 to 12.

14. An apparatus comprising:
a memory element configured to store data;
a processor operable to execute instructions associated with said data;
a display for displaying text and/or media data; and
an Internet application module configured to transmit and receive data via a communication network including the Internet,
wherein the memory element, processor, Internet application module, and display cooperate in order to perform a method according to any of claims 1 to 12.
